# EUROPÄISCHE PATENTSCHRIFT

(11) **EP 4 051 571 B1**
(45) Veröffentlichungstag und Bekanntmachung des Hinweises auf die Patenterteilung: **24.06.2026**
(21) Anmeldenummer: 20811533.7
(22) Anmeldetag: 02.11.2020
(51) Int. Cl.: B63B 32/10, B63B 32/60, B63H 1/16, B63H 11/08, B63B 1/24, B63B 1/30

(54) **WASSERSPORTGERÄT, INSBESONDERE FOILBOARD**
WATER SPORT DEVICE, IN PARTICULAR A FOILBOARD
ÉQUIPEMENT POUR SPORTS NAUTIQUES, EN PARTICULIER PLANCHE DE FOIL

(30) Priorität: 01.11.2019 DE 102019129571
(43) Veröffentlichungstag der Anmeldung: 07.09.2022
(73) Patentinhaber: Rosenxt Holding AG, 6370 Stans (CH)
(72) Erfinder: ROSEN, Hermann, 6047 Kastanienbaum (Horw LO) (CH)
(74) Vertreter: Wischmeyer, André
(86) Internationale Anmeldenummer: PCT/EP2020/080701
(87) Internationale Veröffentlichungsnummer: WO 2021/084131

(56) Entgegenhaltungen:
- EP-A1- 3 214 521
- CN-A- 108 945 334
- US-A- 2 749 870
- US-A- 5 722 864
- US-A1- 2014 134 900
- US-B1- 10 308 336

## Beschreibung

Die vorliegende Erfindung betrifft ein Wassersportgerät, insbesondere ein Foilboard, mit einem Schwimmkörper, vorzugsweise in Form eines Schwimmbretts, und einer Tragflächenvorrichtung, die mittels einer Haltevorrichtung am Schwimmkörper befestigt ist, wobei die an einem Lenker der Haltevorrichtung angeordnete Tragflächenvorrichtung wenigstens eine, vorzugsweise zumindest zwei Tragflächen aufweist und über die Haltevorrichtung aus einer Ruhe- und/oder Startposition in eine Betriebsstellung unterhalb des Schwimmkörpers überführbar ist, wobei der Schwimmkörper in der Betriebsstellung und während einer Vorwärtsbewegung aufgrund eines durch die Tragflächenvorrichtung bewirkten Auftriebs in eine von einer Wasseroberfläche beabstandete Position überführbar ist.

Ein derartiges Wassersportgerät ist insbesondere als Foilboard ausgebildet, der Schwimmkörper ist insbesondere als Schwimmbrett ausgebildet. Die zumindest eine Tragflächenvorrichtung hat insbesondere zumindest zwei Tragflächen. Derartige Wassersportgeräte dienen regelmäßig zur Fortbewegung von Personen, welche sich dazu auf der von der Tragflächenvorrichtung abgewandten Seite des Schwimmkörpers aufhalten, über Gewässer. Während der Fortbewegung ist die Tragflächenvorrichtung regelmäßig unterhalb der Wasseroberfläche angeordnet.

Aus der DE 10 2015 103 553 A1 ist ein Wassersportgerät mit einer auch als Foil zu bezeichnenden Tragflächenvorrichtung bekannt, welche für den Fall eines Unterwasserkontakts zur Vermeidung einer Beschädigung gegen die Fahrtrichtung abklappen kann. Aus der US 2018/0072383 A1 ist des Weiteren eine Tragflächenvorrichtung bekannt, die durch einen einstellbaren Winkel der Verbindungsstrebe zwischen Schwimmkörper und Vortriebsvorrichtung aus einer ersten Betriebsstellung in eine weitere Betriebsstellung überführbar ist. Beide Wassersportgeräte nach dem Stand der Technik benötigen für den Einsatz ein ausreichend tiefes Gewässer, da die Tragflächenvorrichtung ansonsten den Grund berührt und entweder beschädigt oder abgeklappt wird. Für den Transport wird die Tragflächenvorrichtung entweder demontiert oder das Wassersportgerät muss mit der in der Regel bis zu einem Meter abstehenden Tragflächenvorrichtung transportiert werden.

Aus der CN 108945334 B ist ein Wassersportgerät bekannt, welches stabilisierende Flügel aufweist, die über eine Haltevorrichtung gehalten sind. Die Haltevorrichtung ist zum Zwecke des Verstauens des Wassersportgeräts einklappbar.

Aus der US 5,722,864 ist ein marines Antriebssystem bekannt, in dem eine Rotationseinheit mit nach innen in einen Strömungskanal ragenden Schaufeln rotiert.

In der US 10,308,336 B1 ist ein weiteres Antriebssystem für ein Wasserfahrzeug offenbart, welches mit einer Hydrofoilvorrichtung zusammenwirkt.

Die US 2,749,870 A offenbart ein als Angriffsboot ausgebildetes Tragflächenboot mit einer Vielzahl von Tragflächen.

Aufgabe der Erfindung ist die Bereitstellung eines Wassersportgerätes, das bei hoher Zuverlässigkeit auch für Anfänger einfacher handhabbar ist.

Die Aufgabe wird gelöst durch einen Gegenstand gemäß Anspruch 1. Vorteilhafte Ausgestaltungen der Erfindung sind den hierauf rückbezogenen Unteransprüchen sowie der nachfolgenden Beschreibung zu entnehmen.

Erfindungsgemäß weist das Wassersportgerät wenigstens eine, vorzugsweise genau eine, für den Vortrieb des Wassersportgeräts vorgesehene und insbesondere zumindest teilweise als Teil der Tragflächen- und/oder Haltevorrichtung ausgebildete oder an einer dieser oder zwischen diesen angeordnete, mittels einer Steuereinheit steuerbare Vortriebsvorrichtung mit zumindest einem als Innenläufer ausgebildetem Motor. Die auf Seiten der Tragflächen- und/oder Haltevorrichtung oder - falls separate Verbindungselemente zwischen diesen beiden Vorrichtungen angeordnet sind - zwischen diesen beiden Vorrichtungen angeordneten Teile der Vortriebsvorrichtung sind mit der Tragflächenvorrichtung aus Start- und/oder Ruheposition in die Betriebsstellung und zurück überführbar, insbesondere klapp- oder teleskopierbar. Anstelle der Verwendung von z.B. Segeln oder Motorbooten zum Vortrieb bzw. Ziehen des Wassersportgeräts weist dieses eine eigene Vortriebsvorrichtung auf. Diese ist insofern Teil der relativ zum Schwimmkörper bewegbaren Halte- und/oder Tragflächenvorrichtung, als dass zumindest ein Vortriebselement in Form eines Propellers oder Impellers, welches Wasser entgegen der Hauptfahrtrichtung beschleunigt, mit der jeweiligen Vorrichtung (Halte- und/oder Tragflächenvorrichtung) bewegt wird. Das Wassersportgerät kann erfindungsgemäß ufer- oder strandnah in der Ruhe- und/oder Startposition bereits in das z.B. knietiefe Wasser gelassen werden und mittels der Vortriebsvorrichtung in Richtung tieferen Wassers gefahren werden. Sobald ausreichend tiefes Wasser erreicht ist, kann die Tragflächenvorrichtung insbesondere mittels eines Antriebs in die von dem Schwimmkörper stärker beabstandete Betriebsstellung überführt werden. Vorzugsweise ist das Wassersportgerät dergestalt ausgebildet, dass die Vortriebsvorrichtung während des Übergangs der Tragflächenvorrichtung aus der Ruhe- und/oder Startposition in die Betriebsstellung weiterhin Vortrieb liefert und die Fahrt des Wassersportgeräts sich nicht verlangsamt.

Durch die Anordnung der Vortriebsvorrichtung insbesondere in unmittelbarer Nähe zu den Tragflächen wird eine besonders stabile Lage des Wassersportgerätes erreicht. Insbesondere wird durch die Anordnung der Vortriebsvorrichtung ein Vortriebsabriss bei einem Abheben des Schwimmkörpers von der Wasseroberfläche vermieden.

Der Schwimmkörper ist insbesondere ein flacher, länglicher Körper, dessen Dichte deutlich unterhalb derjenigen von Wasser liegt. Der Schwimmkörper ist insbesondere derart ausgebildet, dass er im Betrieb vorzugsweise unabhängig von einer Fahrtgeschwindigkeit jedenfalls teilweise oberhalb der Wasseroberfläche angeordnet ist. Im Betrieb reicht die Haltevorrichtung vom Schwimmkörper zur Tragflächenvorrichtung unterhalb des Schwimmkörpers. Eine durch die Tragflächenvorrichtung erzeugte Auftriebskraft wird durch die Haltevorrichtung auf den Schwimmkörper übertragen. Insbesondere weist er eine surfbrettartige Form auf.

In der Ruhe- und/oder Startposition ist die Tragflächenvorrichtung zugunsten einer größeren Kompaktheit des Wassersportgerätes näher am Schwimmkörper angeordnet als in der Betriebsstellung. Insbesondere können Teile der Halte- und/oder Tragflächenvorrichtung, die in der Betriebsstellung vom Schwimmkörper entfernt sind, in der Ruhe- und/oder Startposition teilweise in zumindest einer Ausnehmung des Schwimmkörpers angeordnet sein. Insbesondere wird die Haltevorrichtung zur Überführung der Tragflächenvorrichtung in die Ruhe- und/oder Startposition eingeklappt und/oder z.B. teleskopartig eingefahren. Insbesondere wird der zumindest eine, erste Lenker zur Überführung der Tragflächenvorrichtung relativ zum Schwimmkörper um zumindest 20°, bevorzugt um zumindest 40°, besonders bevorzugt um zumindest 80° verschwenkt. Vorzugsweise sind die Tragflächen in der Ruhe- und/oder Startposition in einer seitlichen Ansicht nicht mehr als 50 cm von dem Schwimmkörper beabstandet.

Der zumindest eine Lenker ist insbesondere als starre Strebe ausgebildet. Insbesondere ist der Lenker relativ zum Schwimmkörper und/oder relativ zur Tragflächenvorrichtung schwenkbar gelagert. Alternativ oder zusätzlich ist der zumindest eine, erste Lenker relativ zum Schwimmkörper und/oder relativ zur Tragflächenvorrichtung translatorisch beweglich, insbesondere verschieblich gelagert. Die Tragflächenvorrichtung ist insbesondere mittelbar, über weitere Bauteile wie z.B. Lenker, oder unmittelbar mit dem ersten Lenker gekoppelt. Als Lenker wird allgemein ein beweglich und insbesondere gelenkig angebundenes, ansonsten aber starres, als Vollkörper oder hohl ausgebildetes beispielsweise Gestänge-Bauteil bezeichnet, über welches gegebenenfalls in Kombination mit einem oder mehreren weiteren Lenkern Teile des Wassersportgeräts relativ zueinander bewegt werden können. Vorzugsweise weist die Haltevorrichtung gegeneinander verschwenkbare und/oder in- oder aneinander verschiebbare und damit z.B. teleskopierbare Lenker auf.

Die Tragflächenvorrichtung ist bevorzugt zumindest in der Betriebsstellung mit zumindest einer Tragfläche versehen, die flach und vorzugsweise zumindest teilweise flügel- oder flossenförmig ausgebildet ist. Die quer zur Fahrtrichtung gemessene Breite der Tragflächenvorrichtung ist insbesondere höchstens doppelt so groß wie die Breite des Schwimmkörpers. Die Tragflächenvorrichtung dient einer Stabilisierung der Fahrt mit dem Wassersportgerät sowie zur Erzeugung eines Auftriebs dabei, wobei die Tragflächenvorrichtung zur Verstärkung dieser Effekte bevorzugt seitliche Tragflächenenden hat, welche gegenüber der im Wesentlichen flachen Wasseroberfläche angewinkelt sind. Vorzugsweise weist das Wassersportgerät zur Verstärkung dieser Effekte eine Mehrzahl von in Fahrtrichtung voneinander beabstandete und/oder unterschiedlich weit von dem Schwimmkörper beabstandete Tragflächen auf. Die Tragflächenvorrichtung umfasst somit zumindest eine Tragfläche und deren Halterung sowie gegebenenfalls eine Vortriebsvorrichtung.

Um für die Bedienperson einen Zugriff auf die Vortriebsvorrichtung zu ermöglichen weist das Wassersportgerät und insbesondere die Vortriebsvorrichtung eine Steuereinheit auf. Diese kann einen Motorcontroller mit beinhalten oder ergänzend lediglich Steuersignale an den Motorcontroller übermitteln. Insbesondere kann die Kommunikation mit dem Motorcontroller über ein Bus-System vermittelt werden. Die Steuereinheit umfasst für die Steuerung der Vortriebsvorrichtung insbesondere übliche Mittel wie eine Mensch-Maschine-Schnittstelle, elektrische und/oder elektronische Datenverarbeitungsmittel sowie Schnittstellen zu etwaig vorhandenen funktionalen Systemen wie Sensoren.

Vorzugsweise weist die Vortriebsvorrichtung wenigstens einen wellen- und/oder nabenlosen Propeller oder Impeller auf, insbesondere wobei der Impeller zumindest teilweise in einem über zumindest zwei Öffnungen mit der Umgebung verbundenen Strömungskanal eines Vortriebskörpers angeordnet ist. Die Vortriebsvorrichtung ist hierdurch besonders geeignet, ufer- oder strandnah betrieben zu werden, da einerseits durch die Anordnung in einem Strömungskanal das Verletzungsrisiko erheblich reduziert wird, andererseits etwaiger Bewuchs mit Algen oder dergleichen deutlich weniger im Strömungskanal und insbesondere am Impeller hängen bleibt.

Der naben- bzw. wellenlose Impeller wird somit über den als Innenläufer ausgebildeten Motor angetrieben und ist insbesondere mit diesem als eine Baueinheit ausgebildet, so dass der Rotor des Motors insbesondere Teil des Impellers ist.

Insbesondere weist der der Motor einen hohlen, mit seiner Innenseite den Strömungskanal mit ausbildenden und insbesondere an seiner vom Strömungskanal weg gerichteten Außenseite außerhalb des Strömungskanals gelagerten Rotor auf, der Schaufeln trägt, sowie einen äußeren in einem Vortriebskörpergehäuse angeordneten Stator. Wesentliche Funktionsteile des Motors sind somit um den Kühlkanal herum angeordnet, so dass im Gegensatz zu einem mit einer Nabe oder Welle versehenen Propeller die entstehende überschüssige Wärme über eine größere Oberfläche in den Strömungskanal und bei einem insbesondere zylinder- oder torpedoförmigen Vortriebskörpergehäuse gleichzeitig auch besser nach außen abgegeben werden kann. In einer erfindungsgemäßen Ausbildung mit einer Vortriebsvorrichtung, die einen insbesondere als Innenläufer ausgebildeten Elektro-Motor aufweist, lässt sich dieser daher besonders gut stromlinienförmig ausbilden. Bei einer Vortriebsvorrichtung mit einem Verbrennungsmotor wird hingegen ein besonders hoher Effizienzgrad bei gleichzeitig großer Leistung erreicht.

Bevorzugt weist der Rotor Permanentmagneten auf, die durch bzw. über einen Lagerring auf dem Rotor gehalten. Der Lagerring ist bevorzugt in Richtung der Rotationsachse auf den Rotor aufsteckbar bzw. im Betrieb aufgesteckt, wodurch sich die Permanentmagnete in axialer Richtung zwischen dem Lagerring und zumindest einem Absatz des Rotors positioniert befinden. Die Permanentmagneten haben insbesondere zylindermantelabschnittsförmige Innen- und Außenflächen, durch die sich die Permanentmagneten besonders platzsparend in das Unterwassermotormodul einfügen und einen hohen Wirkungsgrad des Motors ermöglichen.

Gemäß einer weiteren Ausbildung eines erfindungsgemäßen Wassersportgeräts bildet eine seitlich abstehende Gehäusewand des/eines Vortriebskörpergehäuses einen Wassereinlass aus. Somit kann die Vortriebsvorrichtung weiter in Fahrtrichtung bauen und dort Bauraum z.B. für Vortriebsenergiespeicher bereithalten. Gleichzeitig ist die Anordnung der Vortriebsvorrichtung in dem Rest der Tragflächenvorrichtung verbessert, da das zu bewegende Wasser nicht notwendigerweise von vorne in die Vortriebsvorrichtung eingebracht werden muss. Eine seitliche abstehende Gehäusewand ist ein über den Außenumfang angrenzender Bereiche des Vortriebkörpergehäuses, d.h. des eigentlichen Gehäuses der Vortriebsvorrichtung hinausragender Bereich.

Vorzugsweise ist zumindest ein Teil der Vortriebsvorrichtung, nämlich insbesondere ein Vortriebskörpergehäuse, an einer Aufnahme der Tragflächenvorrichtung festgelegt, so dass ein einfacher Austausch zu Reparatur- oder Ladezwecken eines in der Vortriebsvorrichtung enthaltenen Vortriebsenergiespeichers, beispielsweise eines Akkus, ermöglicht ist. In dem Vortriebskörpergehäuse ist insbesondere der Impeller der Vortriebsvorrichtung in einem entsprechenden Strömungskanal angeordnet.

Insbesondere weist ein erfindungsgemäßes Wassersportgerät eine Ausnehmung in dem Vortriebskörpergehäuse auf, die durch eine Handhabe der Vortriebsvorrichtung vorzugsweise wasserdicht abgedeckt wird. Hierdurch wird der Zugriff auf z.B. einen Motorcontroller oder Teile der Steuereinheit oder einen Ladeanschluss zum Aufladen eines Akkus ermöglicht. Vorzugsweise zeichnet sich das erfindungsgemäße Wassersportgerät somit durch einen Elektroanschluss oder induktiven Anschlussbereich zur Aufladung eines Vortriebsenergiespeichers auf. Bei einem induktiven Anschlussbereich kann die Ausnehmung mit ihrer Abdeckung entfallen. Es versteht sich, dass ein Vortriebsenergiespeicher auch anderen Verbrauchern wie zum Beispiel Sensoren oder einem Antrieb zum Bewegen der Haltevorrichtung Energie zur Verfügung stellen kann. Insbesondere weist hierfür zumindest einer der Lenker der Haltevorrichtung wenigstens eine entsprechende Leitung auf, wenn der Vortriebsenergiespeicher auf Seiten der Tragflächenvorrichtung oder als Teil dieser bzw. zumindest entfernt vom Schwimmkörper und der Antrieb schwimmkörperseitig angeordnet ist.

Insbesondere zu Kühlungszwecken ist es vorteilhaft, wenn der eine Außenkontur des Wassersportgeräts und insbesondere der Vortriebsvorrichtung mit ausbildende Vortriebsenergiespeicher lösbar an dem weiteren Teil des Wassersportgeräts, insbesondere der Vortriebsvorrichtung festgelegt ist. Ein Entfernen der gesamten Vortriebsvorrichtung entfällt, vielmehr ist nur der Akku zu tauschen. Dieser oder dessen einzelne Module können insbesondere in einem insbesondere hohlzylinder- oder torpedoförmigen vorderen abnehmbaren Teil der Vortriebsvorrichtung angeordnet sein und über die Wand des entsprechenden Gehäuses gekühlt werden. Vorzugsweise befindet sich dieser Teil in Fahrrichtung vor einem den Impeller aufweisenden Motor und ist somit von der Abwärme desselben unbeeinflusst.

Eine erfindungsgemäße Vorrichtung baut weiterhin betriebssicherer für die nutzende Person, wenn sie gemäß einer weiteren Weiterbildung einen Speichersensor zur Überwachung des Vortriebsenergiespeichers aufweist, wobei das Wassersportgerät zur Reduzierung der Leistung oder Abschaltung der Vortriebsvorrichtung aufgrund des Signals des Speichersensors ausgebildet ist. Hierdurch kann beispielsweise eine Tiefentladung der Akkus vermieden werden und einer nutzenden Person eine notwendige Rückkehr zu einer Einsatzstelle, bevor die Vortriebsenergie aufgebraucht ist, signalisiert werden.

Vorzugsweise weist das erfindungsgemäße Wassersportgerät eine im oder am Schwimmkörper angeordnete Kommunikationseinheit auf, mit der Signale, insbesondere Sprach- und/oder Steuersignale zwischen z.B. Nutzern mehrerer erfindungsgemäßer Wassersportgeräte oder einer Einsatzstelle oder Basis und dem Wassersportgerät übertragen werden können. Die Kommunikationseinheit ist hierbei insbesondere Teil der Steuereinheit.

Die Vortriebsvorrichtung und damit das Wassersportgerät ist erfindungsgemäß sowohl in der Ruhe- und/oder Startposition als auch in der Betriebsstellung betreibbar, so das verschiedene Könnensstufen etwaiger Nutzer berücksichtigt werden können.

Ein in der Ruhe- und/oder Startposition kompakteres und somit zu Transportzwecken verbessertes sowie insbesondere im flachen Gewässer besser fahrbares Wassersportgerät ist dann realisiert, wenn der Schwimmkörper wenigstens eine Vortriebskörpergehäuseaufnahme und/oder Ausnehmungen für die Halte- und/oder Tragflächenvorrichtung aufweist, wobei zumindest Teile der Halte- und/oder Tragflächenvorrichtung und/oder der Vortriebsvorrichtung in dieser Aufnahme oder Ausnehmung angeordnet werden können.

Die Stabilität, Geschwindig- und/oder Wendigkeit eines erfindungsgemäßen Wassersportgeräts ist verbessert, wenn gemäß einer weiteren Ausbildung zwei vorzugsweise auf einer Höhe nebeneinander angeordnete Vortriebsvorrichtungen vorhanden sind, insbesondere, wenn sich ein Flügel der Tragflächenvorrichtung - zumindest in einer Draufsicht auf den entsprechenden Teil des Wassersportgeräts - zwischen den beiden Vortriebsvorrichtungen erstreckt.

Die Haltevorrichtung kann hierbei durch einen zentralen Lenker an der Tragfläche und/oder durch Lenker, die direkt an den Vortriebsvorrichtungen oder zugehörigen Aufnahmen gelenkig festgelegt sind.

Für die Anordnung der Steuereinheit ergeben sich verschiedene Möglichkeiten. Zumindest teilweise sind diese jedoch in oder an der Halte- oder Tragflächenvorrichtung und/oder im Vortriebskörpergehäuse angeordnet, so dass etwaige Abwärme produzierende Teile besser gekühlt werden können.

Vorzugsweise umfasst die Vortriebsvorrichtung wenigstens einen Sensor, vorzugsweise eine Mehrzahl von Sensoren aus einer Gruppe umfassend Gyrosensoren, Geschwindigkeitssensoren, Positionssensoren (GPS, Glonass, Beidou oder dgl.), Abstandssensoren, d.h. Sensoren zur Erfassung des Abstands von Gegenständen oder Strukturen (insbesondere Ultraschall, Echolot, Sonar), Infrarotsensoren und Neigungssensoren. Die Ausstattung des Wassersportgeräts mit einem oder mehreren solcher Sensoren ermöglicht die Ausbildung eines "intelligenten" Wassersportgeräts, welches seine Nutzung nicht nur nachvollziehbarer durch Speicherung der Sensordaten in einem entsprechenden Speicher, sondern insbesondere komfortabler, einfacher sowie sicherer werden lässt. Beispielsweise kann ein Positionssensor zur Nachverfolgung des Fahrwegs verwendet werden, ein Geschwindigkeitssensor zur Einstellung der Haltevorrichtung und/oder zumindest von Teilen der Tragflächenvorrichtung, Neigungssensoren zur Ausbalancierung des Wassersportgeräts in einer Betriebsstellung und Infrarotsensoren zur Erfassung von in der Umgebung befindlichen Personen verwendet werden. In Abhängigkeit der Sensordaten kann das Wassersportgerät automatisiert Einstellungen z.B. der Fahrtgeschwindigkeit, der Höhe über der Wasseroberfläche oder der Stellung der Haltevorrichtung vornehmen. Umgekehrt kann in Abhängigkeit von der Höhe über der Wasseroberfläche auch die Geschwindigkeit eingestellt werden. Für einen oder mehrerer dieser Vorgänge ist die Steuereinheit zur Verarbeitung der Signale der Sensoren insbesondere zu Steuersignalen ausgebildet. Es versteht sich, dass die Steuereinheit hierfür entsprechende Datenverarbeitungsmittel, Betriebsenergiespeicher (insbesondere einen oder mehrere Akkus oder Flüssigenergiespeicher) und Kommunikationsmittel einschließlich einer Mensch-Maschine-Schnittstelle aufweist.

Gemäß einer weiteren erfindungsgemäßen Weiterbildung weist die Haltevorrichtung einen Antrieb auf, der vorzugsweise als elektro-mechanischer oder elektro-pneumatischer Antrieb ausgebildet und über den die Tragflächenvorrichtung aus einer Ruhe- und/oder Startposition in die Betriebsstellung und/oder aus der Betriebsstellung in die Ruhe- und/oder Startposition überführbar, insbesondere ein- und ausfahrbar und/oder klappbar, ist. Die Betätigung kann hierbei manuell durch eine das Wassersportgerät bedienende Person erfolgen mit dem Vorteil der einfacheren Transportierbarkeit des Wassersportgeräts gegenüber herkömmlichen Foilboards in der Ruhe- oder Startposition der Tragflächenvorrichtung nahe am oder auch zumindest teilweise im Schwimmkörper. Insbesondere kann das Wassersportgerät ufer- oder strandnah bereits in das z.B. knietiefe Wasser gelassen werden und dort in Richtung tieferen Wassers gefahren werden. Sobald ausreichend tiefes Wasser erreicht ist, kann die Tragflächenvorrichtung mittels des Antriebs in die von dem Schwimmkörper stärker beabstandete Betriebsstellung überführt werden. Dieser Vorgang kann automatisch bei Erreichen einer vorgebbaren oder eingestellten Wassertiefe oder durch Freigabe der das Wassersportgerät nutzenden Person erfolgen.

Der Übergang in die Ruhe- und/oder Startposition kann auch unter der Einnahme von Zwischenstellungen erfolgen, in denen die Tragflächenvorrichtung nicht so dicht an dem Schwimmkörper ist wie in der Ruhe- und/oder Startposition. Für die Auslösung der Betätigung ist der Antrieb mit einer Steuervorrichtung versehen, die ein von einer nutzenden Person ausgelöstes Signal empfängt und ein Steuersignal zum Antrieb leitet. Die Steuervorrichtung ist insbesondere Teil der Steuereinheit.

Ein elektro-pneumatischer Antrieb hat elektrisch versorgte Bauteile zur Einstellung pneumatischen Stellgliedern. Insbesondere wird Druckluft durch elektrische Signale gesteuert. Elektro-mechanische Antriebe zeichnen sich durch die Erzeugung mechanischer Vorgänge, beispielsweise Drehen einer Welle durch einen elektrisch betriebenen Motor aus. Diese Antriebsformen sorgen für eine geringe Fehleranfälligkeit des Wassersportgeräts. Insbesondere ist der Antrieb somit mit einem Elektromotor versehen, dessen Antriebsenergie zur Bewegung der Tragflächenvorrichtung verwendet wird.

Vorzugsweise weist der Antrieb einen Energiespeicher insbesondere zur Speicherung mechanischer Energie auf, die die im Falle der Freisetzung die für das Ein- und Ausfahren oder -klappen des Lenkers notwendige Energie zur Verfügung stellt. Beispielsweise umfasst der Energiespeicher einen Akku zur Speicherung elektrischer Energie, einen Tank zur Speicherung eines druckbeaufschlagten Fluids oder insbesondere einen mechanischen Energiespeicher wie eine Feder auf. In einer ersten Ausführungsform der Erfindung ist der Energiespeicher zur Speisung eines Antriebsmotors ausgebildet, welcher die Überführung der Tragflächenvorrichtung einleitet. In einer bevorzugten weiteren Ausgestaltung der Erfindung gibt der Energiespeicher gespeicherte Energie unmittelbar, ohne zwischengeschalteten Antriebsmotor, als mechanische bzw. kinetische Energie zur Überführung frei. Bevorzugt ist der Energiespeicher einerseits mechanisch mit der Haltevorrichtung gekoppelt und andererseits mittel- oder unmittelbar mit einer Aufladeeinrichtung wie einem Antriebsmotor gekoppelt, die zur Aufladung des Energiespeichers insbesondere während der Nutzung des Wassersportgerätes ausgebildet ist.

Vorzugsweise weist der Antrieb ein insbesondere als Übersetzungsgetriebe ausgebildetes Getriebe auf, über das ein Antriebsmotor des Antriebs der Haltevorrichtung mit dem Energiespeicher verbunden ist, insbesondere dergestalt, dass der Quotient aus der für das Klappen benötigten Zeit (Dividend) und der für das zugehörige Vorspannen benötigten Zeit (Divisor) kleiner 1 ist. Durch die Kombination von Antriebsmotor und Getriebe kann der zur Verfügung stehende Bauraum besser ausgenutzt werden, da Getriebe und Antriebsmotor insbesondere koaxial ausgebildet werden können und besser in der geringen Bauraumhöhe eines brettartigen Schwimmkörpers angeordnet werden kann. Weiterhin kann der Antriebsmotor kleiner dimensioniert werden, wenn das von ihm abgegebene Drehmoment durch das Getriebe übersetzt wird. Insbesondere kann über diese Kombination ein mechanischer Energiespeicher über eine bestimmte Zeit geladen und insbesondere vorgespannt werden, der in der Lage ist, seine gespeicherte Energie zum Bewegen der Tragflächenvorrichtung schneller abzugeben. So kann beispielsweise während einer Fahrt im flacheren Wasser der Energiespeicher über einen Zeitraum von zum Beispiel ein oder zwei Minuten geladen werden, während dann beim Übergang in tieferes Wasser mittels der im Energiespeicher gespeicherten Energie die Tragflächenvorrichtung innerhalb von dreißig Sekunden aus der Ruhe- und/oder Startposition in die Betriebsstellung überführt wird.

Eine besonders kompakte Bauform ergibt sich, wenn gemäß einer weiteren erfindungsgemäßen Ausbildung Antriebsmotor, Getriebe, Energiespeicher und/oder eine nachfolgend noch beschriebene Bremsvorrichtung koaxial insbesondere mit einer Schwenkachse des Lenkers ausgebildet sind. Besonders bevorzugt sind Antriebsmotor, Getriebe und/oder Energiespeicher, insbesondere in Form einer Drehfeder, koaxial zueinander und in einem Hohlraum eines seinerseits schwenkbaren Drehgehäuses angeordnet, welches mittelbar oder unmittelbar mit einem Lenker der Haltevorrichtung zwecks Bewegung desselben verbunden ist. Hierbei kann die Drehfeder ihrerseits wiederum um Antriebsmotor und Getriebe herum angeordnet sein, um den zur Verfügung stehenden Bauraum auszunutzen. Dessen Erstreckung ist insbesondere in Querrichtung eines als Schwimmbrett für ein Foilboard ausgebildeten Schwimmkörpers deutlich größer als in die Vertikalrichtung, so dass eine ausreichend dimensionierte Dreh- oder Spiralfeder, deren Länge in Richtung einer Längsmittelachse insbesondere größer ist als ihre Breite, einen vergleichsweise schlanken Antriebsmotor umfassen kann.

Zwecks der Überführung aus einer ersten Position in eine weitere Position und umgekehrt ist vorzugsweise der wenigstens eine Feder aufweisende Energiespeicher durch Antriebsmotor oder Antriebsmotor und Getriebe in gegensinnige Richtungen vorspannbar.

Vorzugsweise weist die Haltevorrichtung eine insbesondere elektromagnetische oder elektromagnetisch betätigbare Bremsvorrichtung auf, die die Verlagerung der Tragflächenvorrichtung blockiert, freigibt und/oder bremst, so dass die Bewegung der Tragflächenvorrichtung kontrolliert erfolgt. Insbesondere kann die Bremskraft durch Variation einer Anziehungskraft in Abhängigkeit von der Geschwindigkeit des Schwimmkörpers und/oder von der Position der Tragflächen- bzw. Haltevorrichtung regel- oder einstellbar sein. Die Steuereinheit weist hierfür entsprechende Mittel zur Erkennung einer Position der Tragflächenvorrichtung oder der Haltevorrichtung, z.B. Drehwinkelgeber oder Endlagenschalter, Mittel zur Ansteuerung der Bremsvorrichtung, z.B. einen elektrischen, elektro-magnetischen, hydraulischen und/oder pneumatischen Aktor sowie vorzugsweise elektrische und/oder elektronische Signalerzeuger auf, die die von den jeweiligen Sensoren bereitgestellten Informationen, insbesondere die Geschwindigkeit über Grund oder gegen Wasser, verarbeiten.

Für einen Stromausfall ist die Bremsvorrichtung dergestalt konstruiert, dass in der Stromlosstellung die Bewegung der Haltevorrichtung blockiert ist. Hierfür kann eine Bremsscheibe oder ein Bremsbelag oder ein anderes eine Blockade herbeiführendes Teil der Bremsvorrichtung mittels eines Federelements oder eines anderen eine Kraft erzeugenden Elements gegen ein ansonsten bewegbares Teil, beispielsweise des Drehgehäuses, gedrückt werden.

Besonders bevorzugt weist die Haltevorrichtung zumindest einen weiteren Lenker auf. Insbesondere sind der erste Lenker und der weitere Lenker zumindest in der Betriebsstellung der Tragflächenvorrichtung in Fahrtrichtung hintereinander angeordnet. Alternativ oder ergänzend ist/sind der erste Lenker und/oder der zweite Lenker insbesondere am Schwimmkörper und/oder an der Tragflächenvorrichtung oder einer damit starr verbundenen Einheit oder Aufnahme schwenkbeweglich angeordnet. Insbesondere ist also zumindest einer der Lenker schwenkbeweglich an einer Aufnahme für die zumindest eine Tragflächenvorrichtung oder einer Aufnahme der Tragflächenvorrichtung angeordnet. Die Schwenkachsen sind dabei insbesondere quer zur Fahrtrichtung und im Betrieb parallel zur Wasseroberfläche ausgerichtet. Hierdurch lässt sich die Haltevorrichtung als Parallelogrammführung ausbilden, die besonders zuverlässig ist und durch die die Tragvorrichtung insbesondere auch in der Ruhe- und/oder Startposition unterhalb des Schwimmkörpers verbleibt.

Alternativ oder zusätzlich umfasst die Haltevorrichtung bevorzugt weitere Lenker, die jeweils mit einem der beiden Lenker gekoppelt sind und zumindest in der Betriebsstellung zwischen dem Schwimmkörper und der Tragflächenvorrichtung aneinander anschließen und Kraft aufeinander übertragen. Insbesondere sind die beiden ersten bzw. weiteren Lenker schwenkbeweglich zueinander, wodurch sich eine Kniehebel- bzw. Faltmechanik als Haltevorrichtung herstellen lässt. Beispielsweise sind jeweils zwei ein Kniegelenk ausbildende Lenker in Fahrtrichtung hintereinander angeordnet.

In einer vorteilhaften Ausgestaltung der Erfindung hat das Wassersportgerät wenigstens einen Tiefen- und/oder Annäherungssensor, der mit einer zur Steuerung des Antriebs (der Haltevorrichtung) ausgebildeten Steuereinheit verbunden ist. Der Sensor ist insbesondere zur Messung einer Eintauchtiefe des Wassersportgerätes oder eines Bestandteiles davon und/oder zur Messung eines Abstandes des Wassersportgerätes zum (Gewässer)Grund ausgebildet. Alternativ oder ergänzend ist der Sensor oder einer der Sensoren zur Messung eines Abstandes des Wassersportgerätes zu einem Hindernis, insbesondere zu etwaigen weiteren Wassersportgeräten, bevorzugt in Fahrtrichtung, ausgebildet. Der Antrieb ist insbesondere derart ausgebildet, dass in Abhängigkeit der Sensordaten, insbesondere während der Fortbewegung des Wassersportgerätes, der Abstand der Tragflächenvorrichtung vom Schwimmkörper bevorzugt während der Fahrt variiert wird, insbesondere die Tragflächenvorrichtung zumindest teilweise in Richtung der Ruhe- und/oder Startposition oder aus dieser heraus in eine Betriebsstellung bewegt wird. Dadurch lassen sich Beschädigungen des Wassersportgerätes durch Grundberührung insbesondere strand- bzw. ufernah sowie unbeabsichtigte Betriebssituationen wie etwa durch einen zu weit von der Gewässeroberfläche beabstandeten Schwimmkörper vermeiden und wird dem Benutzer bei der Bedienung des Wassersportgerätes assistiert. Vorzugsweise wird somit automatisch und/oder nach einer Freigabe durch die nutzende Person die Tragflächenvorrichtung automatisch nach einem ufer- oder strandnahen Start ausgefahren, wenn genügend Wassertiefe vorhanden ist und anschließend bei der Rückkehr entsprechend wieder eingefahren.

Der Sensor ist insbesondere an der Tragflächenvorrichtung oder der Aufnahme oder dem Schwimmkörper angeordnet. Vorzugsweise weist der Sensor zumindest einen Ultraschallwandler auf. Dadurch lassen sich Abstände bzw. Distanzen besonders zuverlässig unter Wasser feststellen.

Alternativ oder ergänzend zu einem Tiefensensor, mit dem die Eintauchtiefe des Wassersportgeräts erfasst wird, umfasst eine erfindungsgemäße Weiterbildung eines Wassersportgeräts wenigstens einen Fahrtzustandssensor zur Bestimmung des Abstands des Schwimmkörpers von der Wasseroberfläche. Tiefen- und Fahrtzustandssensor können auch durch einen einzigen Sensor oder eine einzige Sensoranordnung ausgebildet werden.

Insbesondere handelt es sich bei dem Fahrtzustandssensor um eine vorzugsweise in einen Lenker der Haltevorrichtung integrierte oder an diese oder diesen angeordnete Sensoreinheit. Beispielsweise kann es sich um einen sich entlang eines Lenkers der Haltevorrichtung erstreckenden oder in diesen über die Lenkerlänge integrierten, auf kapazitiver Basis arbeitenden Sensorstreifen handeln. Ebenfalls kann es sich um eine Sensoreinheit mit einer Mehrzahl von insbesondere kapazitiven Sensoren handeln, die beabstandet voneinander längs der Haltevorrichtung beispielsweise in oder an deren Lenker angeordnet ist. Durch die Sensordaten kann bei bekannter Position der Haltevorrichtung bzw. deren Lenker mittels der Steuereinheit auf den Abstand des Schwimmkörpers von der Wasseroberfläche geschlossen und insbesondere in Kombination mit weiteren Sensordaten beispielsweise zur Fahrtgeschwindigkeit und/oder der Tiefe des Wassers ein gewünschter Fahrtzustand angestrebt werden, beispielsweise durch Anheben oder Absenken des Schwimmkörpers mittels einer Einstellung einer oder mehrerer Tragflächen oder durch Betätigen der Haltevorrichtung oder durch eine Änderung der Fahrgeschwindigkeit. Es versteht sich, dass ein solcher Fahrtzustandssensor, der als einzelner Sensor oder als Sensoreinheit umfassend eine Mehrzahl von Sensoren in der Haltevorrichtung oder an dieser angeordnet ist, auch bei starr an dem Schwimmkörper angeordneten Haltevorrichtungen Verwendung finden kann, bei denen die Haltevorrichtung sowohl in der Betriebsstellung als auch in der Ruhe- und/oder Startposition die Tragflächenvorrichtung in derselben Position zum Schwimmkörper hält.

Insbesondere ist der Fahrtzustandssensor einlaminiert, wobei der Lenker der Haltevorrichtung, die den Sensor aufweist, vorzugsweise aus einem Faserverbundwerkstoff hergestellt ist, so dass ein einerseits stabiler Aufbau des Lenkers erreicht wird und andererseits gleichzeitig die Integration des Fahrtzustandssensors vereinfacht ist. Mit Druckprozessen wie Siebdruck, Dispensen oder Inkjet-Druck können maßgeschneiderte Sensorstrukturen direkt auf das zu verwendende Vlies oder Gewebe appliziert werden, wobei der Fahrtzustandssensor durch die Integration des bedruckten Vlies oder Gewebes in den Schichtaufbau und anschließender Faserverbundherstellung z.B. durch Vakuuminfusion integraler Bestandteil der Struktur der Haltevorrichtung wird.

Ein mit einem Fahrtzustandssensor ausgestattetes Wassersportgerät insbesondere in Form eines Hydrofoil-Boards weist bevorzugt eine optische Anzeigeeinheit auf, die sich insbesondere zumindest über eine Hälfte der Länge der Oberseite des Schwimmkörpers erstreckt und die insbesondere zur Anzeige des Abstands des Schwimmkörpers von der Wasseroberfläche ausgebildet ist, wofür die Anzeigeeinheit eine oder bevorzugt mehrere Leuchtmittel aufweist. Vorzugsweise kann der Abstand von der Wasseroberfläche beispielsweise mit der Anzahl der Leuchtpunkte der Leuchtmittel der Anzeigeeinheit korrelieren. Insbesondere können hierfür RGB-Dioden verwendet werden. Z.B. leuchten bei einem Aufliegen des Schwimmkörpers auf dem Wasser keine oder nur wenige z.B. rote Leuchtmittel auf und je größer der Abstand wird, ändert sich die Anzahl und/oder Farbe der leuchtenden Leuchtmittel über die Schwimmkörperlänge, bis bei einem gewünschten Zustand eine bestimmte beispielsweise maximale Anzahl von Leuchtpunkten aktiviert ist. Beispielsweise kann ein bestimmter, gewünschter oder optimaler Abstand zur Wasseroberfläche mit überwiegend oder ausschließlich grün leuchtenden Leuchtmitteln in Form von z.B. RGB-LEDs bzw. LED-Einheiten gekennzeichnet werden.

Gemäß einer vorteilhaften Ausbildung der Erfindung ist die Steuereinheit zwecks Geofencing zur Erzeugung von Steuersignalen auf Basis von Signalen der Sensoranordnung, insbesondere Sensoren zur Bestimmung einer Position, ausgebildet ist. Geofencing bedeutet die Beschränkung des von dem Wassersportgerät befahrbaren Bereichs auf Basis von Navigationsdaten. Sofern in der Steuereinheit aufgrund von Daten beispielsweise eines Positionssensors festgestellt wird, dass ein vorgebbarer Bereich verlassen wurde oder droht verlassen zu werden, kann beispielsweise die Antriebsleistung einer Vortriebsvorrichtung reduziert bzw. die Tragflächenvorrichtung in eine Ruhe- und/oder Startposition überführt werden.

Vorzugsweise sind die Vortriebsvorrichtung und die Steuereinheit zur insbesondere automatischen Schubsteuerung, weiter insbesondere zur automatischen Schubvektorsteuerung, ausgebildet. Hierdurch wird einer nutzenden Person eine zusätzliche Steuermöglichkeit zur Verfügung gestellt, so dass beispielsweise besonders enge Kurven gefahren oder sogar Sprünge getätigt werden können.

In einer automatisierten Ausführung ist in Verbindung mit insbesondere Lagesensoren wie Gyrometern eine aktive Selbststabilisierung des Wassersportgeräts insbesondere in der Betriebsstellung gegeben. Bei einer aktiven Selbststabilisierung gleicht die Steuereinheit somit Instabilitäten aus, indem sie Steuerbefehle an zumindest einen Aktor des Wassersportgeräts senden, wobei Aktoren aktive Stellmittel sind. Hierbei kann es sich um einen Motor der Vortriebsvorrichtung, um verstellbare Klappen oder Düsen oder um verstellbare Finnen, Ruder, Tragflächen oder einzelne verstellbare Abschnitte hiervon handeln. In der Steuereinheit werden Eingangsgrößen wie Daten über die Lage des Wassersportgeräts, Leistung der Vortriebsvorrichtung, Geschwindigkeit, Beschleunigung und/oder Nutzereingaben ausgewertet und Steuerbefehle für einen Aktor oder mehrere Aktoren, über die die verstellbaren Mittel betätigt werden, erzeugt. Hierdurch wird insbesondere Anfängern schneller ein besseres Fahrerlebnis ermöglicht. Insbesondere ist die Steuereinheit zur aktiven Selbststabilisierung des Wassersportgeräts mittels der Schubvektorsteuerung während des Übergangs in die Betriebsstellung und/oder beim Abheben des Schwimmkörpers von der Wasseroberfläche ausgebildet, da während dieser Phasen große Einflüsse auf die nutzende Person erfolgen.

Vorzugsweise umfasst das Wassersportgerät eine für den Vortrieb desselben vorgesehene Vortriebsvorrichtung, deren schwimmkörperseitig angeordneter Vortriebsmotor über einen winkelbeweglichen und/oder längsbeweglichen Vortriebsstrang antriebsmäßig mit einem insbesondere als Propeller oder Impeller ausgebildetem und unter Wasser anzuordnenden Vortriebselement verbunden ist. Hierdurch ist die Tragflächenvorrichtung unter Wasser stromlinienförmiger zu bauen.

Vorzugsweise umfasst die Vortriebsvorrichtung einen schwenkbaren Propeller, zumindest eine schwenkbare Leitschaufel und/oder eine Mehrzahl von in unterschiedliche Richtungen schwenkbare Düsen aufweist, so dass mittels der Vortriebsvorrichtung die Tragflächen- und oder Haltevorrichtung und somit das Wassersportgerät ausrichtbar ist. In einem weiteren Ausführungsbeispiel kann auch der gesamte unter Wasser befindliche Teil der Vortriebsvorrichtung ausrichtbar sein.

Es ergibt sich weiterhin ein Komfortgewinn, insbesondere bei einer Mehrzahl von Nutzern desselben Wassersportgeräts, wenn in der Steuereinheit eine Mehrzahl von auswählbaren Fahrprofilen hinterlegt ist. Beispielsweise kann das Fahrprofil eine vorgebbare Maximalgeschwindigkeit, eine Höhe über dem Wasser oder eine maximale Entfernung von einer Einsatzstelle oder Basis umfassen.

Vorzugsweise ist ein erfindungsgemäßes Wassersportgerät gemäß einer Weiterbildung der Erfindung mit einer Steuereinheit versehen, die zur Kommunikation mit einer Steuereinheit einer weiteren Vortriebsvorrichtung desselben oder eines weiteren Wassersportgeräts ausgebildet ist und insbesondere zur Erzeugung von Steuersignalen für eine oder beide Vortriebsvorrichtungen aufgrund der von dem weiteren Wassersportgerät übermittelten Positions-, Steuer- und/oder Fahrsignalen/-daten ausgebildet ist. Hierdurch kann beispielsweise ein Kurslehrer einem Kursteilnehmer gezielt das Fahren auf einem entsprechenden Wassersportgerät beibringen, es können bei zwei Nutzern Wettkämpfe durchgeführt werden und allgemein zumindest zwei Wassersportgeräte in einem abgestimmten Modus z.B. hinsichtlich Maximalgeschwindigkeit oder Entfernung von einander nebeneinander betrieben werden.

In einer weiteren erfindungsgemäßen Weiterbildung zeichnet sich das Wassersportgerät dadurch aus, dass der Steuereinheit ein Headset umfassend zumindest einen Kopfsensor zur Aufnahme von Bewegungen zumindest eines Teils des Kopfes einer im Betrieb auf dem Wassersportgerät befindlichen Person zugeordnet ist. Hierdurch können die Arme und Beide frei zur Balancierung bewegt werden, ohne etwaige Steuerungsmittel in der Hand zu halten. Beispielsweise kann durch gezielte und vorab festlegbare oder festgelegte Bewegungsabläufe, die von der Steuereinheit vorgegeben oder von dieser erlernt werden können, beispielsweise mehrmaliges Nicken oder Schütteln des gesamten Kopfes die Vortriebsgeschwindigkeit erhöht oder verringert werden. Zur Erkennung dieser Bewegung weist das Headset z.B. einen Beschleunigungssensor als Kopfsensor auf.

Weitere Vorteile und Einzelheiten der Erfindung sind der nachfolgenden Figurenbeschreibung zu entnehmen. In den Abbildungen zeigt schematisch dargestellt:
- Fig. 1: einen erfindungsgemäßen Gegenstand in einer Seitenansicht,
- Fig. 2: den Gegenstand nach Fig. 1 in einer Ansicht von hinten,
- Fig. 3: den Gegenstand nach Fig. 1 in einer perspektivischen Darstellung von unten,
- Fig. 4: einen weiteren erfindungsgemäßen Gegenstand in einer Seitenansicht,
- Fig. 5: einen weiteren erfindungsgemäßen Gegenstand in einer Seitenansicht,
- Fig. 6: den Gegenstand nach Fig. 5 in einer perspektivischen Darstellung von oben,
- Fig. 7: den Gegenstand nach Fig. 5 in der Ruhe- und/oder Startposition,
- Fig. 8: einen weiteren erfindungsgemäßen Gegenstand in einer perspektivischen Ansicht,

Fig. 9 und 10 einen weiteren erfindungsgemäßen Gegenstand.

Einzelne technische Merkmale der nachfolgend beschriebenen Ausführungsbeispiele können auch in Kombination mit den Merkmalen des unabhängigen Anspruchs zu erfindungsgemäßen Weiterbildungen führen. Sofern sinnvoll sind funktional gleichwirkende Teile mit identischen Bezugsziffern versehen.

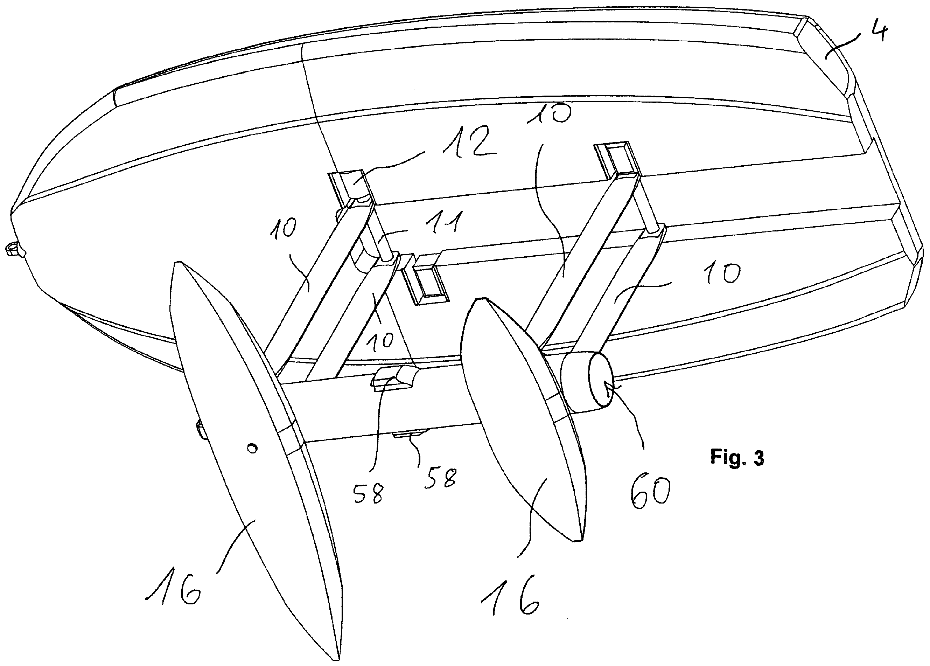

Ein erfindungsgemäßes Wassersportgerät 2 umfasst einen Schwimmkörper 4, der über eine Tragflächenvorrichtung 6 mit einer Haltevorrichtung 8 verbunden ist. Die Tragflächenvorrichtung 6 umfasst mehrere Lenker 10, die einenends gelenkig am Schwimmkörper 4 und anderenends gelenkig an der Tragflächenvorrichtung 6 angeordnet sind. Über einen Antrieb 12 (vgl. Fig. 3) werden die in Fahrtrichtung F vorderen Lenker 10, die auf einer gemeinsamen Welle 11 angeordnet sind, bewegt. Über die Kopplung mittels einer Vortriebsvorrichtung 50 der Tragflächenvorrichtung 6 sind die in Fahrtrichtung F hinteren Lenker 10 zwangsgeführt. Insofern ist lediglich ein einziger, ausreichend dimensionierter Antrieb 12 notwendig.

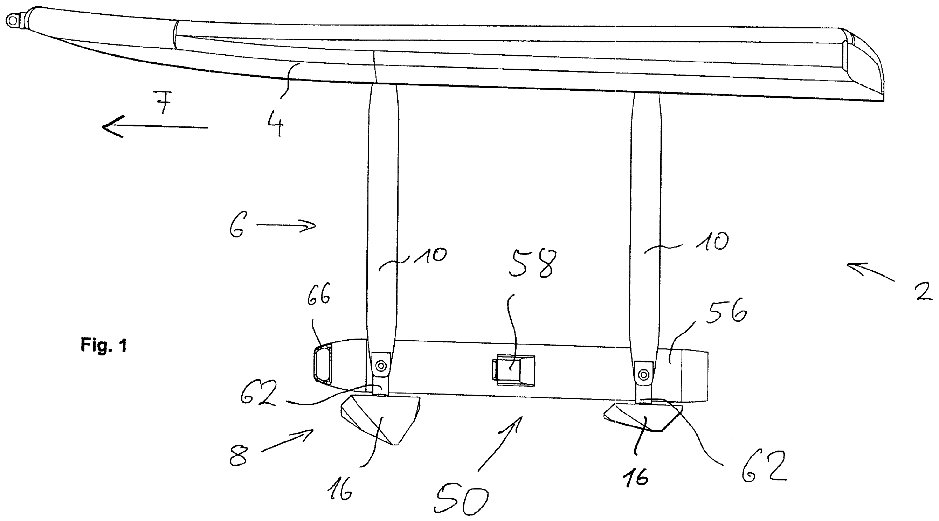

Die Lenker 10 sind strömungsoptimiert ausgebildet mit einer in Fahrtrichtung F betrachtet geringeren Erstreckung als quer dazu (Fig. 1). Darüber hinaus sind die Anströmflächen gerundet und die Lenker im Querschnitt insbesondere tropfen- bzw. flügelartig ausgebildet.

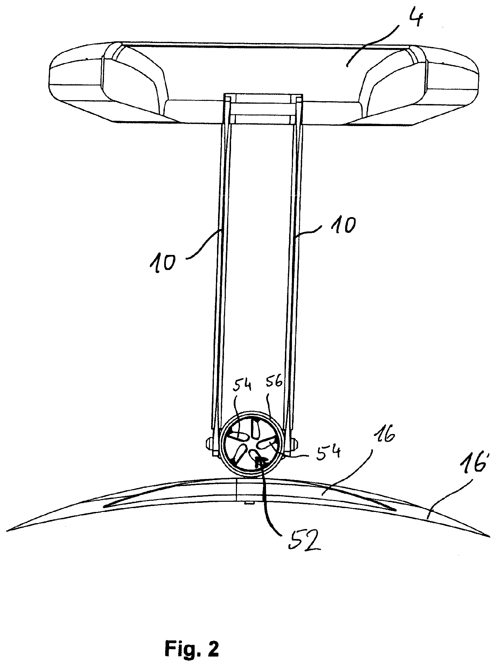

Die Vortriebsvorrichtung 50 ist vorliegend mit einem nabenlosen Impeller 52 ausgebildet (Fig. 2). Der zugehörige Motor weist einen Rotor auf, der mit seiner Innenseite den Strömungskanal mit ausbildet und entsprechend hohl ist, wobei auf der Innenseite des Rotors die Schaufeln 54 fest angeordnet sind. Der Rotor ist auf seiner vom Strömungskanal weg gerichteten Außenseite außerhalb des Strömungskanals gelagert und läuft in einem Stator, der in einem Vortriebskörpergehäuse 56 angeordnet ist.

Zwei seitlich abstehende Gehäusewände 58 (vgl. Fig. 1 und 3) begrenzen zwei als Einlassöffnungen ausgebildete Öffnungen, durch die das durch die Auslassöffnung 60 ausgestoßene und beschleunigte Wasser in den innenliegenden Strömungskanal gelangt. Die Vortriebsvorrichtung umfasst das in zwei Aufnahmen 62 festgelegten Vortriebskörpergehäuse 56 mit einem innenliegenden Vortriebsenergiespeicher, dem als Innenläufer ausgebildeten Motor inkl. nabenlosem Impeller sowie eine nicht näher dargestellte Steuereinheit, die mit einem Mensch-Maschine-Interface zur Bedienung der Vortriebsvorrichtung 50 ausgebildet ist. Entsprechende Leitungsmittel führen beispielsweise durch die Lenker 10 in den Schwimmkörper 4 und werden von dort beispielsweise drahtlos zu einem Handgerät des das Wassersportgerät bedienenden Nutzers übertragen.

Über eine solche Steuereinheit bzw. Schnittstelle kann beispielsweise das Überführen der Tragflächenvorrichtung 6 mit ihren Tragflächen 16 aus der gezeigten Betriebsstellung in eine Start- und/oder Ruheposition der Tragflächenvorrichtung 6 dichter am Schwimmkörper 4 freigegeben oder ausgelöst werden.

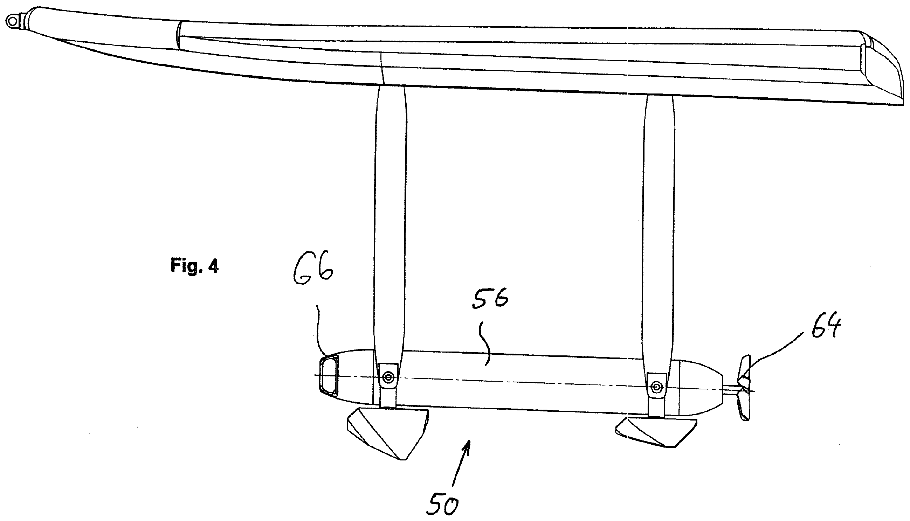

Das Ausführungsbeispiel gem. Fig. 4 weist eine sehr ähnliche Ausbildung auf, wobei allerdings die Vortriebsvorrichtung 50 einen Propeller 64 statt eines in einem Strömungskanal befindlichen Impellers aufweist. Der Propeller 64 wird über einen im Vortriebskörpergehäuse 56 angeordneten Motor angetrieben. Sowohl dieses Ausführungsbeispiel als auch das der Fig. 1 bis 3 sowie die nachfolgenden Ausführungsbeispiele weisen Vortriebsvorrichtungen 50 auf, die einen in Fahrtrichtung F vor dem Motor befindlichen Vortriebsenergiespeicher besitzen. Dieser ist zwischen Propeller 64 und Handhabe 66 in dem Vortriebskörpergehäuse 56 innenliegend angeordnet. Durch Abschrauben der Handhabe 66 ist der als Akkumulator ausgebildete Vortriebsenergiespeicher in dem Vortriebskörpergehäuse 56 erreichbar.

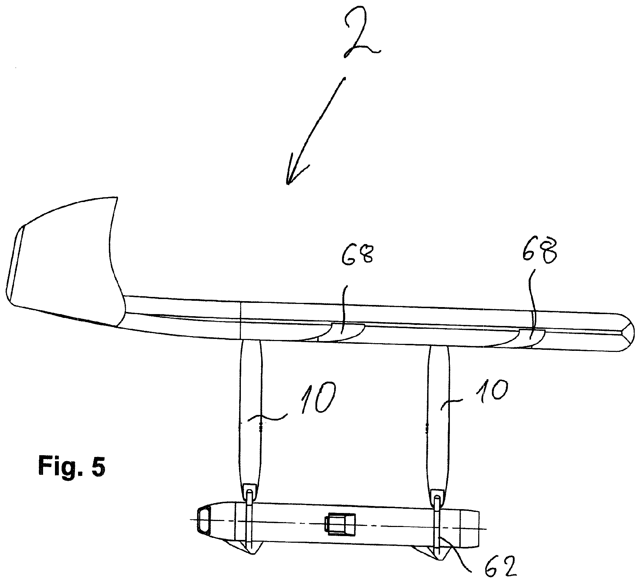

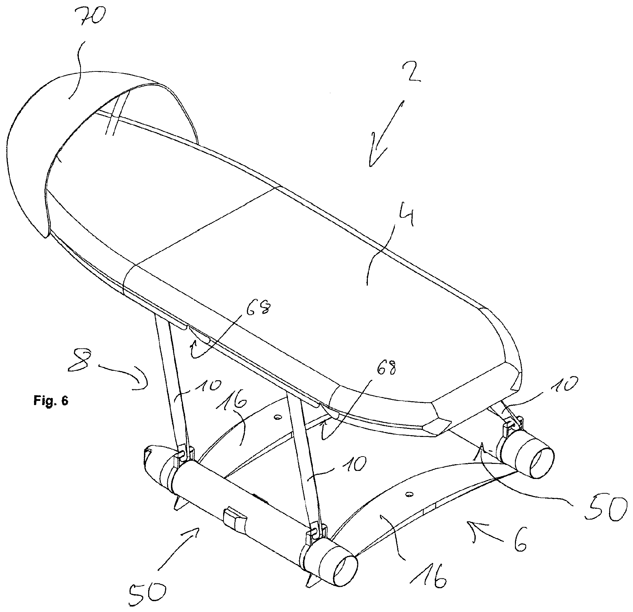

Genau wie bei den Ausführungsbeispielen der Fig. 1 bis 4 ist das Ausführungsbeispiel der Fig. 5 bis 7 dergestalt ausgebildet, dass die Tragflächenvorrichtung 6 mittels der Haltevorrichtung 8 aus der in Fig. 6 gezeigten Betriebsposition in eine Start- und/oder Ruheposition der Tragflächenvorrichtung 6 dicht am Schwimmkörper 4 überführbar ist.

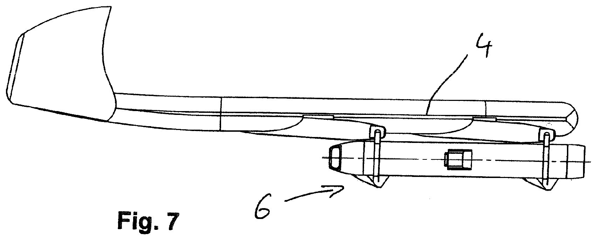

Auch für diese Überführung aus der Start- und/oder Ruheposition in die in der Fig. 6 gezeigte Betriebsstellung und zurück ist ein entsprechender Antrieb 12 im Schwimmkörper 4 angeordnet. Im Unterschied zu den Ausführungsbeispielen der vorherigen Figuren sind die Lenker der Variante der Fig. 5 bis 7 allerdings von einer vertikalen Längsmittelebene nach unten hin auseinander gespreizt, so dass sie beim Überführen aus der Betriebsstellung in Fig. 6 in die Stellung bzw. Position nach Fig. 7 in seitlichen Ausnehmungen 68 für die Lenker 10 angeordnet sind. Hierdurch lässt sich die Tragflächenvorrichtung 6 noch dichter an den Schwimmkörper 4 bringen und die Vortriebsvorrichtung 50 kann bereits in flachen Gewässern verwendet werden.

Vor dem Hintergrund der beispielsweise jeweils 5 KW Leistung erbringenden Vortriebsvorrichtungen 50 und der damit einhergehenden Geschwindigkeit kann das Wassersportgerät 2 der Fig. 5 bis 7 für die Fahrt in der Betriebsstellung, in der der Schwimmkörper 4 von der Wasseroberfläche abgehoben ist und nur noch ein unterer Teil der Haltevorrichtung 8 sowie die Tragflächenvorrichtung 6 mit ihren zwischen den Vortriebsvorrichtungen 50 befindlichen Tragflächen 16 im Wasser ist, mit einem Schild 70 versehen sein, welcher auch in der oberflächennahen Verdrängungs- bzw. Gleitfahrt des Schwimmkörpers Schutz vor Wellen bzw. Wind bietet.

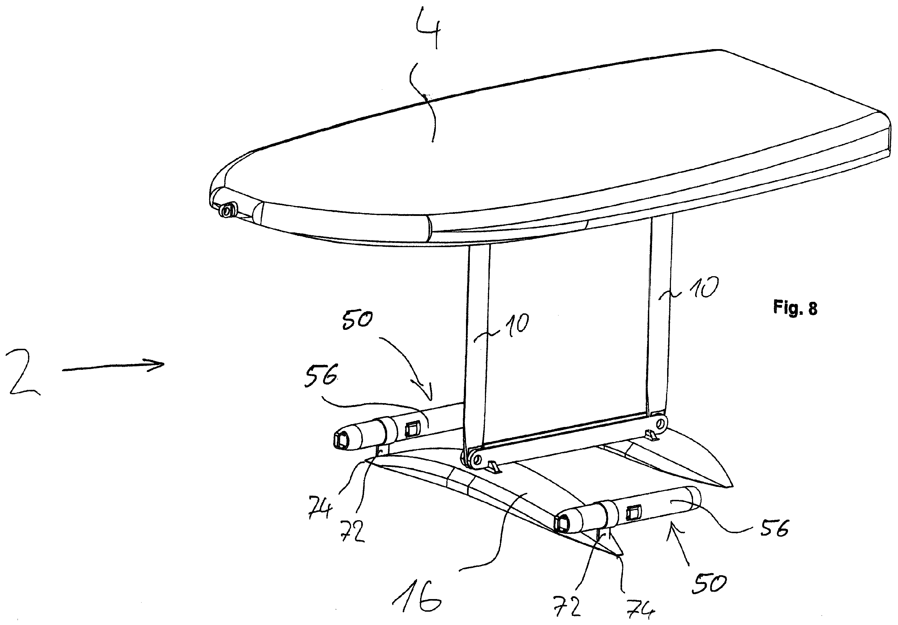

Etwas kleinere und von der Leistung her mit beispielsweise 3 KW etwas schwächere Vortriebsvorrichtungen 50 sind beim Ausführungsbeispiel der Fig. 8 jeweils endseitig der in Fahrtrichtung vorderen Tragfläche 16 angeordnet. Beide Vortriebsvorrichtungen 50 sind mit jeweils einem Impeller ausgestattet und entsprechen somit vom Aufbau her der Vortriebsvorrichtung der Fig. 1 bis 3. Um eine Strömung um die vordere Tragfläche 16 möglichst wenig zu beeinträchtigen, sind die Vortriebsvorrichtungen 50 über Abstandshalter 72 jeweils im Endbereich der Tragfläche 16 dicht bei den Flügelspitzen 74 angeordnet. Durch die Anordnung möglichst dicht an den Flügelspitzen 74, d. h. innerhalb von 20 cm von der jeweiligen Flügelspitze 74 beabstandet hin zur vertikalen Längsmittelebene, die die beiden Lenker 10 schneidet, wird die Vorrichtung während der Fahrt in der Betriebsstellung zusätzlich stabilisiert. Gleichzeitig kann auch wie bei dem Ausführungsbeispiel der Fig. 5 bis 7 durch unterschiedliche Ansteuerung der Vortriebsvorrichtungen 50 eine Kurvenfahrt unterstützt werden. Da gleichzeitig durch die nur zwei in Fahrtrichtung hintereinander befindlichen Lenker 10 der Wasserwiderstand reduziert wird, ergeben sich für das Wassersportgerät gem. Fig. 8 besonders hohe Geschwindigkeiten bzw. die Vortriebsvorrichtungen 50 können leistungsreduziert ausgelegt werden. Letzteres reduziert gleichzeitig auch den aus etwaigen in der Vortriebsvorrichtung 50 angeordneten Akkumulatoren gedeckten Stromverbrauch. Diese können dann vom Bauraum her kleiner und/oder für einen längeren Betrieb ausgelegt werden.

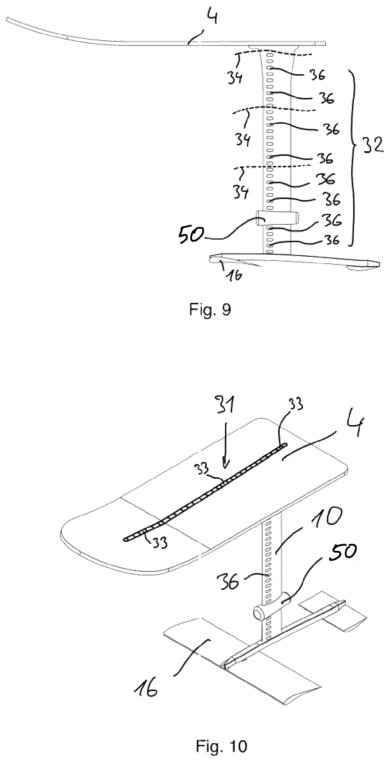

Gemäß einem weiteren erfindungsgemäßen Ausführungsbeispiel ist entlang eines Lenkers 10 der Haltevorrichtung 8 eine Mehrzahl von kapazitiven Sensoren 36 zur Ausbildung eines Fahrtzustandssensors 32 angeordnet (Fig. 9 und 10). Diese erstrecken sich gleichmäßig über einen Großteil des Lenkers 10 entlang dessen Längserstreckung und geben in Abhängigkeit davon, ob sie ober- oder unterhalb einer jeweils durch gestrichelte Linien indizierten Wasseroberfläche 34 angeordnet sind, entsprechende Daten an eine vorzugsweise im Schwimmkörper 4 angeordnete Steuereinheit. Hierdurch lässt sich in dieser ein Abstand des Schwimmkörpers 4 zur Wasseroberfläche 34 bestimmen, woraufhin bei ungewünschten Zuständen die Steuereinheit z.B. den Schub der Vortriebsvorrichtung 50, die in den Lenker 10 integriert ist, oder eine Winkelstellung einer Tragfläche 16 anpassen kann.

Das Ausführungsbeispiel der Figuren 9 und 10 weist weiterhin eine in den Schwimmkörper integrierte optische Anzeigeeinheit 31 auf, die den Abstand des Schwimmkörpers 4 von der Wasseroberfläche abbildet. Die Anzeigeeinheit 31 umfasst eine Mehrzahl von einlaminierten mehrfarbigen LED-Einheiten 33, so dass der Abstand von der Wasseroberfläche 34 über Anzahl und/oder Wellenlänge der leuchtenden LED-Einheiten 33 abgebildet werden kann.

## Patentansprüche

1. Wassersportgerät, insbesondere Foilboard, mit einem Schwimmkörper (4), vorzugsweise in Form eines Schwimmbretts, und einer Tragflächenvorrichtung (6), die mittels einer Haltevorrichtung (8) am Schwimmkörper (4) befestigt ist,
wobei die an einem Lenker (10) der Haltevorrichtung (8) angeordnete Tragflächenvorrichtung (6) wenigstens eine, vorzugsweise zumindest zwei Tragflächen (16) aufweist und über die Haltevorrichtung (8) aus einer Ruhe- und/oder Startposition dicht am Schwimmkörper (4) in eine Betriebsstellung unterhalb des Schwimmkörpers (4) überführbar ist,
wobei der Schwimmkörper (4) in der Betriebsstellung und während einer Vorwärtsbewegung aufgrund eines durch die Tragflächenvorrichtung (6) bewirkten Auftriebs in eine von einer Wasseroberfläche beabstandete Position überführbar ist,
mit wenigstens einer für den Vortrieb des Wassersportgeräts vorgesehenen und insbesondere zumindest teilweise als Teil der Tragflächen- und/oder Haltevorrichtung (6,8) ausgebildeten oder an einer dieser oder zwischen diesen angeordneten, mittels einer Steuereinheit steuerbaren Vortriebsvorrichtung (50),
**dadurch gekennzeichnet, dass** der Motor als Innenläufer ausgebildet ist und die Vortriebsvorrichtung (50) sowohl in der Ruhe- und/oder Startposition als auch in der Betriebsstellung betreibbar ist, dergestalt, dass das Wassersportgerät in der Ruhe- und/oder Startposition ufer- oder strandnah mittels der Vortriebsvorrichtung in Richtung tieferen Wassers gefahren werden kann.

2. Wassersportgerät nach Anspruch 1, **dadurch gekennzeichnet, dass** die Vortriebsvorrichtung (50) wenigstens einen wellen- und/oder nabenlosen Impeller (52) oder Propeller (64) umfasst, wobei vorzugsweise der Impeller (52) zumindest teilweise in einem über zumindest zwei Öffnungen mit der Umgebung verbundenen Strömungskanal eines Vortriebskörpers (56) angeordnet ist.

3. Wassersportgerät nach Anspruch 2, **dadurch gekennzeichnet, dass** der Motor einen hohlen, mit seiner Innenseite den Strömungskanal mit ausbildenden und insbesondere an seiner vom Strömungskanal weg gerichteten Außenseite außerhalb des Strömungskanals gelagerten Rotor aufweist, der Schaufeln (54) trägt, sowie einen äußeren in einem Vortriebskörpergehäuse (56) angeordneten Stator umfasst.

4. Wassersportgerät nach Anspruch 3, **dadurch gekennzeichnet, dass** der Rotor in Umfangsrichtung nebeneinander angeordnete Permanentmagnete aufweist, welche insbesondere über einen Lagerring auf dem Rotor gehalten sind.

5. Wassersportgerät nach einem der vorherigen Ansprüche, **dadurch gekennzeichnet, dass** eine seitlich abstehende Gehäusewand (58) des/eines Vortriebskörpergehäuses (56) einen Wassereinlass ausbildet.

6. Wassersportgerät nach einem der vorherigen Ansprüche, **dadurch gekennzeichnet, dass** die Vortriebsvorrichtung (50) lösbar an einer Aufnahme der Tragflächenvorrichtung (8) festgelegt ist.

7. Wassersportgerät nach einem der vorherigen Ansprüche, **gekennzeichnet durch** eine eine Ausnehmung des Vortriebskörpergehäuses (56) vorzugsweise wasserdicht abdeckende Handhabe (66) der Vortriebsvorrichtung (50).

8. Wassersportgerät nach einem der vorherigen Ansprüche **gekennzeichnet durch** einen Elektroanschluss oder induktiven Anschlussbereich zur Aufladung eines Vortriebsenergiespeichers.

9. Wassersportgerät nach einem der vorherigen Ansprüche, **dadurch gekennzeichnet**, das ein eine Außenkontur des Wassersportgeräts (2) mit ausbildender Vortriebsenergiespeicher lösbar an dem weiteren Teil des Wassersportgeräts (2) festgelegt ist.

10. Wassersportgerät nach Anspruch 8 oder 9, **gekennzeichnet durch** einen Speichersensor zur Überwachung des Vortriebsenergiespeichers, wobei das Wassersportgerät (2) zur Reduzierung der Leistung oder Abschaltung der Vortriebsvorrichtung (50) aufgrund des Signals des Speichersensors ausgebildet ist.

11. Wassersportgerät nach einem der vorherigen Ansprüche, **gekennzeichnet durch** eine im oder am Schwimmkörper angeordnete Kommunikationseinheit.

12. Wassersportgerät nach einem der vorherigen Ansprüche, **dadurch gekennzeichnet, dass** der Schwimmkörper (2) wenigstens eine Vortriebskörperaufnahme und/oder Ausnehmungen (68) für die Haltevorrichtung (8) aufweist.

13. Wassersportgerät nach einem der vorherigen Ansprüche, **gekennzeichnet durch** zwei vorzugsweise auf einer Höhe nebeneinander angeordnete Vortriebsvorrichtungen (50).

14. Wassersportgerät nach Anspruch 13, **dadurch gekennzeichnet, dass** sich ein Flügel (16) der Tragflächenvorrichtung (6) zwischen den beiden Vortriebsvorrichtungen (50) erstreckt.

15. Wassersportgerät nach einem der vorherigen Ansprüche, **dadurch gekennzeichnet, dass** die Steuereinheit in oder an der Halte- oder Tragflächenvorrichtung (8,6) angeordnet ist.

16. Wassersportgerät nach einem der vorherigen Ansprüche, **dadurch gekennzeichnet, dass** das Wassersportgerät (2) wenigstens einen Sensor, vorzugsweise eine Mehrzahl von Sensoren aus einer Gruppe umfassend Gyrosensoren, Geschwindigkeitssensoren, Positionssensoren (GPS, Glonass, Beidou etc.), Abstandssensoren (Echolot, Sonar) Infrarotsensoren und Neigungssensoren aufweist.

17. Wassersportgerät nach Anspruch 15 und 16, **dadurch gekennzeichnet, dass** die Steuereinheit zur Verarbeitung der Signale der Sensoren insbesondere zu Steuersignalen ausgebildet ist.

18. Wassersportgerät nach einem der vorherigen Ansprüche, **dadurch gekennzeichnet, dass** die Haltevorrichtung (8) einen Antrieb (12) aufweist, der vorzugsweise als elektro-mechanischer oder elektro-pneumatischer Antrieb (12) ausgebildet ist, über den die Tragflächenvorrichtung (6) aus einer Ruhe- und/oder Startposition in die Betriebsstellung und/oder aus der Betriebsstellung in die Ruhe- und/oder Startposition überführbar, insbesondere ein- und ausfahrbar und/oder klappbar, ist.

19. Wassersportgerät nach Anspruch 18, **dadurch gekennzeichnet, dass** das Wassersportgerät, insbesondere die Haltevorrichtung (8), eine Bremsvorrichtung aufweist, die vorzugsweise elektromagnetisch betätigbar oder elektromagnetisch ausgebildet ist und die die Verlagerung der Tragflächenvorrichtung (6) freigibt und/oder bremst.

20. Wassersportgerät nach einem der vorherigen Ansprüche, **dadurch gekennzeichnet, dass** die Vortriebsvorrichtung (50) zur insbesondere automatischen Schubsteuerung, weiter insbesondere zur automatischen Schubvektorsteuerung, ausgebildet ist.

21. Wassersportgerät nach einem der vorherigen Ansprüche, **dadurch gekennzeichnet, dass** die Steuereinheit zur Kommunikation mit einer Steuereinheit einer weiteren Vortriebsvorrichtung (50) desselben oder eines weiteren Wassersportgeräts (2) ausgebildet ist und zur Erzeugung von Steuersignalen für eine oder beide Vortriebsvorrichtungen (50) aufgrund der von dem weiteren Wassersportgerät (2) übermittelten Positions-, Steuer- und/oder Fahrsignalen/-daten ausgebildet ist.

22. Wassersportgerät nach einem der vorherigen Ansprüche, **dadurch gekennzeichnet, dass** der Steuereinheit ein Headset umfassend zumindest einen Kopfsensor zur Aufnahme von Bewegungen zumindest eines Teils des Kopfes einer im Betrieb auf dem Wassersportgerät (2) befindlichen Person zugeordnet ist.

23. Wassersportgerät nach einem der vorherigen Ansprüche, **gekennzeichnet durch** wenigstens einen Fahrtzustandssensor (32) zur Bestimmung des Abstands des Schwimmkörpers (4) und/oder der Tragflächenvorrichtung (6) von der Wasseroberfläche (34), insbesondere wobei der Fahrtzustandssensor einlaminiert ist.

## Claims

1. A water sports device, especially a foilboard, having a floating body (4), preferably in the form of a floating board, and a foil device (6), which is secured to the floating body (4) by means of a retaining device (8),
wherein the foil device (6) arranged on a link (10) of the retaining device (8) has at least one, preferably at least two foils (16) and the foil device can be transferred via the retaining device (8) from a resting and/or starting position close to the floating body (4) into an operating position below the floating body (4),
wherein the floating body (4) in the operating position and during a forward movement can be moved by an uplift force produced by the foil device (6) into a position in which it is distant from a water surface,
with at least one propulsion device (50), which can be controlled by means of a control unit and which is provided for propelling the water sports device and which is designed in particular at least partially as part of the foil and/or retaining device (6,8) or arranged on one of these or between these,
**characterized in that,** the motor is designed as an internal rotor motor and the propulsion device (50) can be operated both in the resting and/or starting position and in the operating position, such that in the resting and/or starting position near the shore or beach the water sports device can be driven by means of the propulsion device toward deeper water.

2. The water sports device as claimed in claim 1, **characterized in that** the propulsion device (50) comprises at least one shaftless and/or hubless impeller (52) or propeller (64), wherein preferably the impeller (52) is arranged at least partially in a flow duct of a propulsion body (56), which flow duct is connected by at least two openings to the surroundings.

3. The water sports device according to claim 2, **characterized in that** the motor comprises a hollow rotor which, with its inner side, at least partially forms the flow channel and which, in particular is mounted with its outer side facing away from the flow channel outside the flow channel, which rotor carries blades (54), and **in that** the motor further comprises an external stator arranged in a propulsion body housing (56).

4. The water sports device as claimed in claim 3, **characterized in that** the rotor comprises permanent magnets situated alongside each other in the circumferential direction, being secured to the rotor in particular by a bearing ring.

5. The water sports device as claimed in one of the preceding claims, **characterized in that** a sideways projecting housing wall (58) of the/a propulsion body housing (56) forms a water inlet.

6. The water sports device as claimed in one of the preceding claims, **characterized in that** the propulsion device (50) is removably secured to a mount of the foil device (8).

7. The water sports device as claimed in one of the preceding claims, **characterized by** a handle (66) of the propulsion device (50) covering a recess of the propulsion body housing (56) preferably in a water-tight manner.

8. The water sports device as claimed in one of the preceding claims, **characterized by** an electric terminal or inductive terminal zone for the charging of a propulsion energy store.

9. The water sports device as claimed in one of the preceding claims, **characterized in that** a propulsion energy store also forming an outer contour of the water sports device (2) is removably secured to the rest of the water sports device (2).

10. The water sports device as claimed in claim 8 or 9, **characterized by** a store sensor to monitor the propulsion energy store, the water sports device (2) being designed to reduce the power or switch off the propulsion device (50) based on the signal of the store sensor.

11. The water sports device as claimed in one of the preceding claims, **characterized by** a communication unit arranged in or on the floating body.

12. The water sports device as claimed in one of the preceding claims, **characterized in that** the floating body (2) comprises at least one propulsion body mount and/or recesses (68) for the retaining device (8).

13. The water sports device as claimed in one of the preceding claims, **characterized by** two propulsion devices (50) preferably arranged side by side at the same height.

14. The water sports device as claimed in claim 13, **characterized in that** a wing (16) of the foil device (6) extends between the two propulsion devices (50).

15. The water sports device as claimed in one of the preceding claims, **characterized in that** the control unit is arranged in or on the retaining or foil device (8,6).

16. The water sports device as claimed in one of the preceding claims, **characterized in that** the water sports device (2) comprises at least one sensor, preferably a plurality of sensors from a group comprising gyro sensors, velocity sensors, position sensors (GPS, Glonass, Beidou etc.), distance sensors (echo sounder, sonar), infrared sensors and tilt sensors.

17. The water sports device as claimed in claim 15 and 16, **characterized in that** the control unit is designed to process the signals of the sensors, especially to form control signals.

18. The water sports device as claimed in one of the preceding claims, **characterized in that** the retaining device (8) comprises a drive (12), which is preferably designed as an electro-mechanical or electro-pneumatic drive (12), by which the foil device (6) can be moved from a resting and/or starting position into the operating position and/or from the operating position into the resting and/or starting position, in particular, it can be extended and retracted and/or folded.

19. The water sports device as claimed in claim 18, **characterized in that** the water sports device, especially the retaining device (8), comprises a braking device, which is preferably electromagnetically actuable or electromagnetically designed and which releases and/or brakes the displacement of the foil device (6).

20. The water sports device as claimed in one of the preceding claims, **characterized in that** the propulsion device (50) is designed for thrust control, in particular for automatic thrust control, and further in particular for automatic thrust vector control.

21. The water sports device as claimed in one of the preceding claims, **characterized in that** the control unit is configured to communicate with a control unit of a further propulsion device (50) of the same or of a further water sports device (2), and is configured to generate control signals for one or both propulsion devices (50) on the basis of position, control and/or travel signals/data transmitted by the further water sports device (2).

22. The water sports device as claimed in one of the preceding claims, **characterized in that** a headset comprising at least one head sensor for detecting movements of at least a part of the head of a person located on the water sports device (2) during operation is assigned to the control unit.

23. The water sports device as claimed in one of the preceding claims, **characterized in that** the water sports device has at least one travel-state sensor (32) for determining the distance of the float (4) and/or of the foil device (6) from the water surface (34), in particular wherein the travel-state sensor is laminated in.

## Revendications

1. Équipement pour sports nautiques, en particulier planche à aile portante, comprenant un flotteur (4), de préférence sous la forme d'une planche flottante, et un dispositif à surfaces portantes (6) qui est fixé au corps flottant (4) au moyen d'un dispositif de retenue (8),
le dispositif à surfaces portantes (6) disposé sur un bras de direction (10) du dispositif de retenue (8) possédant au moins une, de préférence au moins deux surfaces portantes (16) et pouvant être transféré par le dispositif de retenue (8) d'une position de repos et/ou de départ proche du corps flottant (4) à une position de fonctionnement sous le corps flottant (4),
le corps flottant (4), en position de fonctionnement et pendant un mouvement vers l'avant, en raison d'une poussée d'Archimède provoquée par le dispositif à surfaces portantes (6), pouvant être amené dans une position espacée d'une surface de l'eau,
comprenant au moins un dispositif de propulsion (50) pouvant être commandé au moyen d'une unité de commande, prévu pour la propulsion de l'équipement pour sports nautiques et en particulier réalisé au moins partiellement en tant que partie du dispositif à surfaces portantes et/ou de retenue (6, 8) ou disposé sur l'un de ceux-ci ou entre ceux-ci,
**caractérisé en ce que** le moteur est réalisé sous la forme d'un rotor interne et le dispositif de propulsion (50) peut être actionné aussi bien dans la position de repos et/ou de départ que dans la position de fonctionnement, de telle sorte que l'équipement pour sports nautiques, dans la position de repos et/ou de départ à proximité de la rive ou de la plage, peut être déplacé en direction d'eaux plus profondes au moyen du dispositif de propulsion.

2. Équipement pour sports nautiques selon la revendication 1, **caractérisé en ce que** le dispositif de propulsion (50) comprend au moins une roue (52) ou une hélice (64) sans arbre et/ou sans moyeu, la roue (52) étant de préférence disposée au moins partiellement dans un canal d'écoulement d'un corps de propulsion (56) qui est relié à l'environnement par au moins deux ouvertures.

3. Équipement pour sports nautiques selon la revendication 2, **caractérisé en ce que** le moteur possède un rotor creux, qui participe avec son côté intérieur à la formation du canal d'écoulement et qui est monté à l'extérieur du canal d'écoulement, en particulier sur son côté extérieur orienté à l'opposé du canal d'écoulement, lequel porte des pales (54), et comporte également un stator extérieur disposé dans un boîtier de corps de propulsion (56).

4. Équipement pour sports nautiques selon la revendication 3, **caractérisé en ce que** le rotor possède des aimants permanents disposés les uns à côté des autres dans la direction circonférentielle, lesquels sont maintenus sur le rotor, notamment par l'intermédiaire d'une bague de palier.

5. Équipement pour sports nautiques selon l'une des revendications précédentes, **caractérisé en ce qu'**une paroi de boîtier (58) du/d'un boîtier de corps de propulsion (56) qui fait saillie latéralement forme une entrée d'eau.

6. Équipement pour sports nautiques selon l'une des revendications précédentes, **caractérisé en ce que** le dispositif de propulsion (50) est fixé de manière amovible à un logement du dispositif à surfaces portantes (8).

7. Équipement pour sports nautiques selon l'une des revendications précédentes, **caractérisé par** une poignée (66) du dispositif de propulsion (50) qui recouvre, de préférence de manière étanche à l'eau, un évidement dans le boîtier de corps de propulsion (56).

8. Équipement pour sports nautiques selon l'une des revendications précédentes, **caractérisé par** une borne électrique ou une zone de connexion inductive destinée à charger un accumulateur d'énergie de propulsion.

9. Équipement pour sports nautiques selon l'une des revendications précédentes, **caractérisé en ce qu'**un accumulateur d'énergie de propulsion qui participe à la formation d'un contour extérieur de l'équipement pour sports nautiques (2) est fixé de manière amovible à la partie supplémentaire de l'équipement pour sports nautiques (2).

10. Équipement pour sports nautiques selon la revendication 8 ou 9, **caractérisé par** un capteur de stockage destiné à surveiller l'accumulateur d'énergie de propulsion, l'équipement pour sports nautiques (2) étant configuré pour réduire la puissance ou désactiver le dispositif de propulsion (50) sur la base du signal du capteur de stockage.

11. Équipement pour sports nautiques selon l'une des revendications précédentes, **caractérisé par** une unité de communication disposée dans ou sur le corps flottant.

12. Équipement pour sports nautiques selon l'une des revendications précédentes, **caractérisé en ce que** le corps flottant (2) possède au moins un logement de corps de propulsion et/ou des évidements (68) pour le dispositif de retenue (8).

13. Équipement pour sports nautiques selon l'une des revendications précédentes, **caractérisé par** deux dispositifs de propulsion (50) qui sont disposés l'un à côté de l'autre de préférence à une hauteur.

14. Équipement pour sports nautiques selon la revendication 13, **caractérisé en ce qu'**une aile (16) du dispositif à surfaces portantes (6) s'étend entre les deux dispositifs de propulsion (50).

15. Équipement pour sports nautiques selon l'une des revendications précédentes, **caractérisé en ce que** l'unité de commande est disposée dans ou sur le dispositif de retenue ou à surfaces portantes (8, 6).

16. Équipement pour sports nautiques selon l'une des revendications précédentes, **caractérisé en ce que** l'équipement pour sports nautiques (2) possède au moins un capteur, de préférence une pluralité de capteurs issus d'un groupe comprenant des capteurs gyroscopiques, des capteurs de vitesse, des capteurs de position (GPS, Glonass, Beidou, etc.), des capteurs de distance (échosondeur, sonar), des capteurs infrarouges et des capteurs d'inclinaison.

17. Équipement pour sports nautiques selon les revendications 15 et 16, **caractérisé en ce que** l'unité de commande est configurée pour traiter les signaux des capteurs, en particulier pour former des signaux de commande.

18. Équipement pour sports nautiques selon l'une des revendications précédentes, **caractérisé en ce que** le dispositif de retenue (8) possède un mécanisme d'entraînement (12), qui est de préférence réalisé sous la forme d'un mécanisme d'entraînement électromécanique ou électropneumatique (12), par le biais duquel le dispositif à surfaces portantes (6) peut être amené à passer, en particulier rentré et sorti et/ou replié, d'une position de repos et/ou de départ à la position de fonctionnement et/ou de la position de fonctionnement à la position de repos et/ou de départ.

19. Équipement pour sports nautiques selon la revendication 18, **caractérisé en ce que** l'équipement pour sports nautiques, en particulier le dispositif de retenue (8), possède un dispositif de freinage qui est de préférence actionnable de manière électromagnétique ou de configuration électromagnétique et qui libère et/ou freine le déplacement du dispositif à surfaces portantes (6).

20. Équipement pour sports nautiques selon l'une des revendications précédentes, **caractérisé en ce que** le dispositif de propulsion (50) est configuré pour une commande de la poussée notamment automatique, et plus particulièrement pour une commande du vecteur de poussée automatique.

21. Équipement pour sports nautiques selon l'une des revendications précédentes, **caractérisé en ce que** l'unité de commande est configurée pour la communication avec une unité de commande d'un dispositif de propulsion (50) supplémentaire du même équipement pour sports nautiques ou d'un équipement pour sports nautiques (2) supplémentaire et est configurée pour générer des signaux de commande pour l'un ou les deux dispositifs de propulsion (50) sur la base des signaux/données de position, de commande et/ou de déplacement communiqués par l'équipement pour sports nautiques (2) supplémentaire.

22. Équipement pour sports nautiques selon l'une des revendications précédentes, **caractérisé en ce qu'**à l'unité de commande est associé un casque d'écoute comprenant au moins un capteur de tête destiné à enregistrer les mouvements d'au moins une partie de la tête d'une personne qui est en activité sur l'équipement pour sports nautiques (2).

23. Équipement pour sports nautiques selon l'une des revendications précédentes, **caractérisé par** au moins un capteur d'état de navigation (32) destiné à déterminer la distance entre le corps flottant (4) et/ou le dispositif à surfaces portantes (6) et la surface de l'eau (34), le capteur d'état de navigation étant en particulier incorporé par stratification.
